# EUROPEAN PATENT APPLICATION

(11) **EP 2 651 029 A2**
(43) Date of publication of application: **16.10.2013**
(21) Application number: 13162955.2
(22) Date of filing: 09.04.2013
(51) Int. Cl.: H02P 27/06

(54) **Paralleling of load commutated inverters**

(30) Priority: 15.04.2012 US 201213447247
(71) Applicant: General Electric Company, Schenectady, New York 12345 (US)
(72) Inventor: Xu, Chunchun, Salem, VA 24153 (US); Luo, Cheng, Salem, VA 24153 (US); Ritter, Allen Michael, Salem, VA 24153 (US); Harbourt, Cyrus David, Salem, VA 24153 (US); Monclova, Pedro, Salem, VA 24153 (US)
(74) Representative: Picker, Madeline Margaret

(57) **Abstract**

A device includes a controller that receives current values generated by at least four parallel load commutated inverters (LCIs) 12. The controller includes a source firing generator 60 that generates independent source firing commands for each of the at least four parallel LCIs 12 based on the received current values and transmits each of the independent source firing commands to a respective one of the at least four parallel LCIs, wherein the source firing commands are configured to set input phase angle values of the four parallel LCIs 12.

## Description

The subject matter disclosed herein relates to power control systems, and more specifically, the paralleling of multiple load commutated inverters that may be used within power control systems.

A Load Commutated Inverter (LCI) is an electrical device that transforms direct current (DC) electricity to alternating current (AC) electricity through natural commutation. Typical applications for LCIs include starters and power drives for synchronous machines such as compressors, fans, pumps, extruders, ships' drives, generators, and so forth. However, high power LCI drives that include sufficient drive torque, minimum impact of circulating current, minimum input line current harmonics, and minimum machine torque ripple may be required to effectively and efficiently start and drive larger and more exigent machines.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one embodiment, a device includes a controller configured to receive current values generated by at least four parallel load commutated inverters (LCIs), wherein the controller includes a source firing generator configured to generate independent source firing commands for each of the at least four parallel LCIs based on the received current values, and transmit each of the independent source firing commands to a respective one of the at least four parallel LCIs, wherein the source firing commands are configured to set input phase angle values of the four parallel LCIs.

In a second embodiment, a non-transitory computer-readable medium having computer executable code stored thereon, the code including instructions for receiving current values generated by at least four parallel load commutated inverters (LCIs), generating independent source firing commands for each of the at least four parallel LCIs based on the received current values, and transmitting each of the independent source firing commands to a respective one of the at least four parallel LCIs, wherein the source firing commands are configured to set input phase angle values of the four parallel LCIs.

In a third embodiment, a device including a first load commutated inverter (LCI), a second LCI, a third LCI, and a fourth LCI, wherein each of the first, second, third, and fourth LCIs are connected in parallel, wherein each of the each of the first, second, third, and fourth LCIs receive a source input phase shifted by a constant value with respect to an adjacent LCI.

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of a parallel load commutated inverter power control system; and
FIG. 2 is a schematic diagram of the embodiment of the load commutated inverter power control system of FIG. 1 and an embodiment of a controller.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments relate to large power control systems that use a multiple parallel load commutated inverter configuration to execute methods of power and speed control of synchronous rotating equipment and other industrial machinery. A single control unit may be used to control multiple LCI bridges concurrently by managing and regulating the firing angles and phase shifts of each of the LCI bridges. Such a control scheme may provide flexibility of paralleling multiple lower-power LCI drives to get a higher-power LCI drive without significant redesign and added components to the power bridge and mechanical system. It should also be appreciated that the methods described herein are applicable to any industrial machinery, and not solely synchronous machines.

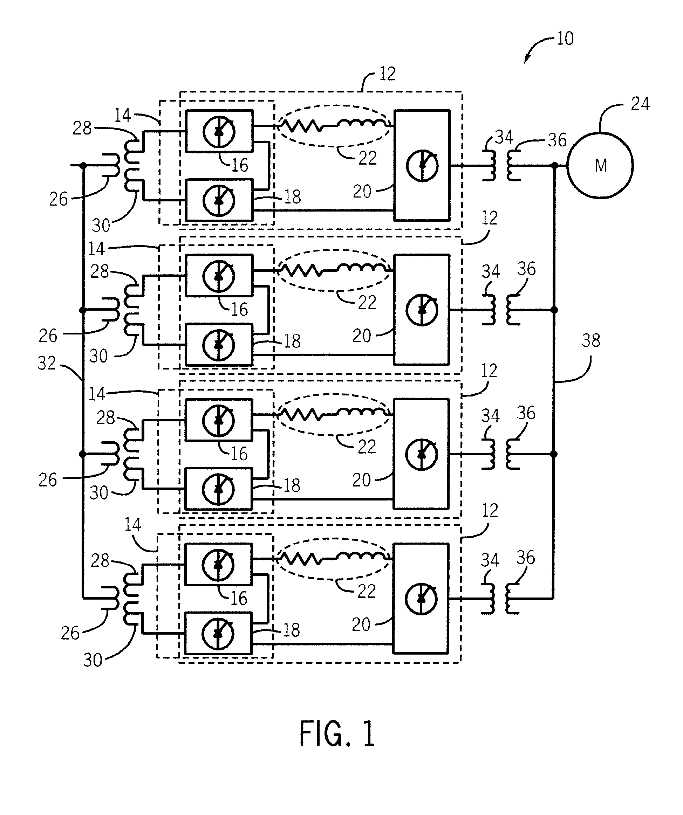

With the foregoing in mind, FIG. 1 is a schematic diagram of a multiple parallel load commutated inverter (LCI) system 10, which includes multiple parallel load commutated inverter (LCI) bridges 12, input transformers, each of which may include a primary winding 26 and two secondary windings 28 and 30, output transformers 34, 36, and a machine 24. The LCI system 10 may be used as a starting converter, a continuous duty drive, or similar system for controlling the source of power, and by extension speed and torque provided to various industrial machinery such as the machine 24. In the case that the LCI system 10 is a starting converter, for example, (e.g., when a rotating machine is initially started up from a generally stationary position), the LCI system 10 may function as a variable speed alternating current (AC) drive system that drives, for example, a synchronous motor. Similarly, the LCI system 10 may operate as a continuous duty drive. For example, the LCI system 10 may operate continuously at the rated torque of the machine 24, for example, from near zero to the optimal rated speed of the machine 24. The LCI system 10 may also include high starting and accelerating torque capability, which for example, may be useful for large conveyors, metal processing, rod, bar, and wire mills, as well as various extrusion, mixing, grinding and compressor applications. In certain embodiments, the LCI system 10 may also include high power capability, as the LCI system 10 may control both the machine current and power factor to control torque and speed of the machine 24. For example, the machine 24 may be a three-phase synchronous machine, and the LCI system 10, for example, may be used to start or continuously drive one or more machines 24 rated at 56 mega-watts (MW) or more.

In certain embodiments, the LCI system 10 may operate by using load commutated, phase-controlled power technology (e.g., load commutated inverters, transformers, firing angle generators, etc.) to supply power and control to the stator windings, for example, of the machine 24. The power circuit (e.g., LCI bridges 12) of the LCI system 10 may include multiple source converters connected to the power supply and load inverters connected to the machine 24. When driving, for example, power may flow from the power source to the machine 24. The LCI system 10 may provide control, for example, to monitor motor torque and regulate motor speed. Torque, or similar operational characteristics of machine 24, may be controlled through a DC link current. As will be further appreciated, the source converters, controlled by the managing and regulating of the firing angle, may control the DC link current by changing the voltage across the link reactor, and by extension the torque and speed of machine 24. Similarly, load inverters, which may also be controlled by the managing and regulating of a firing angle, may maximize the power output and control the output power factor (i.e., the phase angle between the output voltage and current) to maintain the power factor at near unity, for example, to reduce undesirable frequency harmonics in the power output to machine 24. As used herein, the term firing angle may refer to the phase angle of the voltage, current, or combinations thereof, at which the silicon-controlled rectifiers (SCRs) or thyristors that may compose source converter bridges and load inverter bridges switches to an "ON" state, or the state in which each of the respective source converter bridges and load inverter bridges conducts electrical current.

In certain embodiments, the LCI system 10 includes multiple parallel load commutated inverter (LCI) bridges 12 and a converter 14, which may include source converter bridges 16 and 18 as depicted in FIG. 1. The LCI bridges 12 may each be an electrical device that transforms direct current (DC) electricity via a DC reactor link to alternating current (AC) electricity through natural commutation. For example, as previously noted, the LCI bridges 12 may each be an electrical current source, generally a thyristor based current drive device that may be operated as both a starting converter and continuous duty drive for industrial rotating machines such as, the machine 24. The multiple parallel LCI bridges 12 may each include two series-connected source bridge converters 16 and 18, a DC link reactor 28, and a load inverter bridge 20. As depicted, the source bridges 16 and 18 may direct electrical current to the load bridge inverter 20 via the DC link reactor 22. The two series-connected source converter bridges 16 and 18 may each include silicon-controlled rectifiers (SCRs) or thyristors, which may be used to respectively switch the source converter bridges 16 and 18 to and from "ON" and "OFF" states. For example, in the "OFF" state, the source converter bridges 16 and 18 may each restrict the flow of current to only a leakage current. Similarly, in the "ON" state, for example, the source bridge converters 16 and 18 may each conduct current when the input current exceeds the threshold voltage of the source converter bridges 16 and 18.

In certain embodiments, each of the source bridges 16 and 18 may be poly-phase full-wave SCRs or thyristor bridges. Thus, collectively, the source bridge converter 16 and the source bridge converter 18 may provide a 12-pulse source bridge converter rectifier. Additionally, the load inverter bridges 20 may each include multiple SCRs or thyristors. In certain embodiments, the load inverter bridges 20 may each be a load-commutated inverter (LCI), in which each may be used in a parallel configuration to control the power supply to the stator windings of a synchronous machine 24, and more specifically, control the torque to regulate the machine 24 speed. As can be appreciated, the series connection of the source converter bridge 16 and the source converter bridge 18 may allow for sharing of the electrical bus, such that the source converter bridges 16 and 18 may be summed together to provide a DC voltage to the DC link reactors 22. The summed DC voltage, for example, may be converted back into a three-phase AC signal using the load inverter bridge 20 to produce a variable frequency AC signal that is provided to the synchronous machine 24. The DC link reactors 22 may each also limit ripple current that may flow between the source converter bridges 16 and 18 and the load converter bridges 20 as the input power is rectified from AC to DC. Further, as depicted, the DC link reactors 22 may each also include resistive and reactive components. As depicted, and will be further appreciated, each of the LCI bridges 12 may include independent DC link reactors 22, and the current flowing through the DC link reactors 22 may be independently controlled to follow the same reference current to determine the firings (e.g., voltage and current to place source converter bridges 16 and 18 in "ON" state).

In certain embodiments, the LCI system 10 may also include parallel poly-phase multi-winding input transformers, each of which may include a primary winding 26, and two secondary windings 28 and 30. The parallel input transformers may collectively be used to transform (e.g., step-up or step-down) the voltage of the incoming power from, for example, a primary distribution voltage (e.g., 13.8 kilovolts [kV]) to a decreased distribution voltage (e.g., 4160 volts [V]). The parallel input transformers 26, 28, 30 may also collectively input power to the parallel LCI bridges 12. For example, each of the parallel input transformers may input a 4160V to the source converter bridges 16 and 18 and the load inverter bridges 20 to be rectified and produce a three-phase power signal having a 6 pulse output (i.e., 24 pulse output for four parallel LCI bridges 12).

As previously discussed, the parallel multi-winding input transformers may each include a primary winding 26, and two secondary windings 28 and 30. The primary winding 26 may be electrically coupled at one end to the secondary windings 28 and 30 and electrically coupled at the opposing end to an AC input bus 32. In certain embodiments, the primary winding 26 and two secondary windings 28 and 30 may be connected in a number of different three-phase transformer connections. For example, the primary winding 26 may be connected in a Wye connection, and may be paralleled with secondary winding 28 connected in a Delta connection. Likewise the secondary winding 30 may connected in a Wye connection. Such a configuration of the primary and secondary windings 26, 28, and 30 may be referred to as a Wye-parallel-Delta, Wye connection of the parallel input transformers. For any Delta-Wye (e.g., primary to secondary) or Wye-Delta (e.g., primary to secondary) connection of a given transformer, there is 30 degree phase shift as power is transformed from the primary winding of the transformer to the secondary winding of the transformer.

In certain embodiments, the Wye-parallel-Delta, Wye connection, for example, of the parallel input transformers in conjunction with the parallel source bridge converters 16 and 18 may produced a 12 pulse DC power signal from the three-phase input AC power signal. As noted above with respect to the parallel input transformers, a 30 degree phase shift may be introduced from the primary winding 26 to the secondary winding (e.g., windings 28 and/or 30) of the poly-phase input transformer when the winding configurations are not of the same three-phase transformer connection. For example, a transformer connected in either Wye-Delta or Delta-Wye may produce 30 degree phase shift of power, while there may be no phase shift between the primary and secondary windings for a three-phase input transformer connected Wye-Wye or Delta-Delta. Accordingly, as the primary winding 26 may be Wye-connected, the secondary winding 28 may be Delta-connected and coupled to source bridge converter 16 to produce a 30 degree phase-shifted 6 pulse DC power output. Similarly, the secondary winding 30 may be Wye-connected (e.g., having the same three-phase transformer connection as primary winding 26) to also produce a 6 pulse DC output power. The superposition of the parallel 6 pulse DC power outputs may produce a 12 pulse DC power output, which becomes the power input to the load inverter bridges 20. It should also be appreciated that the AC input current may also 12 pulse power input. As a result, the load inverter bridges 20 may output a 6 pulse AC power output. As it may be worth noting, the multiple parallel input transformers may each further be phase shifted by 7.5 degrees, for example, to reduce the current harmonics from the input source, and produce a 48 pulse input in lieu of the original 12 pulse input. Moreover, it may also be appreciated that the AC input current is also a 12 pulse input, such that the AC input current is 12 pulse, and the AC output current is 6 pulse, this saying deals nothing with the DC side.

In certain embodiments, the multiple paralleling of input transformers and LCI bridges 12 may produce a 12 pulse AC power input and 6 pulse AC power output for each of the sets of input transformers and LCI bridges 12. For example, as depicted in FIG. 1, the four sets of input transformers and LCI bridges 12 may collectively produce a 48 pulse AC power input (i.e., a 48 pulse AC power input AC line current, while the DC current for each LCI bridge 12 is still a 12 pulse rectified DC value) and a 24 pulse AC power output (i.e., a 24 pulse output AC current transmitted to, for example, a motor stator winding of machine 24, and to produce a 24 pulse output the output transformers 34, 36 phase shift 15 degrees with respect to one another between LCIs 12. The output of each of the load inverter bridges 20 may be connected to the primary winding 34 of respective parallel output transformers, and the secondary winding 36 of the respective output transformers may collectively be electrically coupled via AC output bus 38 to the stator winding, for example, of the machine 24. As will be discuss in further detail, each of the parallel output transformers may have a 15 degree phase degree phase shift in between each of the parallel output transformers.

In certain embodiments, the parallel output transformers 34, 36 may, in a similar manner to the input transformers, include a phase shift between each of the individual output transformers 34, 36. As will be further appreciated, controlling the phase shift of each LCI bridges 12 may compensate for the phase shift that may occur between the primary and secondary windings of output transformers 34, 36. For example, a first output transformer of the parallel output transformers 34, 36 may be connected in a Delta-Delta configuration, in which there is 0 degree phase shift. Another of the parallel output transformers 34, 36 may be connected in a Delta-Zigzag configuration, producing a 15 degree phase shift. Similarly, as depicted in FIG.1 for example, a third output transformer of the parallel output transformers 34, 36 may be connected in a Delta-Wye configuration, in which there is a 30 degree phase shift, while a fourth a first output transformer of the parallel output transformers 34, 36 may be connected in a Delta-Zigzag configuration to produce a 45 degree phase shift. The resulting power output may be a 24 pulse AC current output, which may reduce undesirable signal harmonics and machine torque ripple as compared to, for example, the original 6 pulse power output of the individual output transformers 34, 36. One benefit of a 24 pulse output current is to reduce machine torque ripple, while a 48 pulse input current has a benefit of minimizing or eliminating the need for input filters.

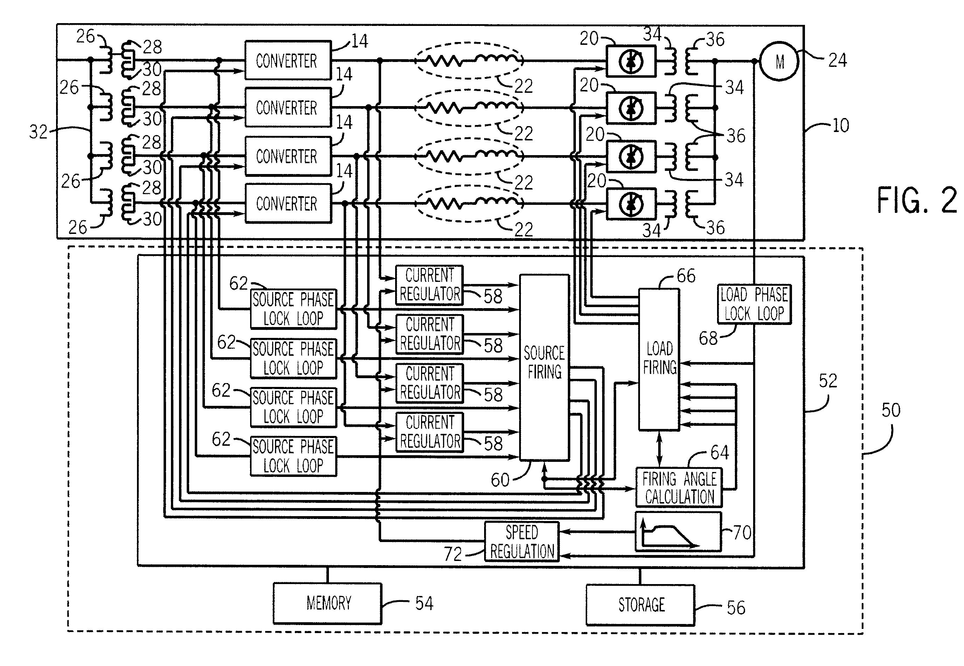

In certain embodiments, the LCI system 10 of FIG. 1, including each of the LCI bridges 12, may be concurrently controlled by a central industrial computer 50 as depicted in FIG. 2. The industrial computer 50 may include a central processing unit 52 and/or other data processing circuitry (e.g., an application specific integrated circuit) that may be operatively coupled to a memory 54 and storage 56 to execute instructions for carrying out presently disclosed methods. These instructions may be encoded in programs stored in tangible non-transitory computer-readable medium such as the memory 54 (e.g., RAM, Flash, etc.) and/or storage 56 (e.g., disk drive). The central processing unit 52 may also support an operating system (i.e., a particular program) capable of supporting and managing software applications and systems (e.g., a web browser, system manager, digital signal processing applications, control applications, etc.). The instructions and programs may be stored in any suitable article of manufacture that includes at least one tangible non-transitory, computer-readable medium that at least collectively stores these instructions or routines, such as the memory 54 and/or the storage 56. Although not shown, the industrial computer 50 may also include a display for displaying, for example, a graphical user interface (GUI) and/or data related to communications within the LCI system 10. Additionally, the industrial computer 50 may include input/output (I/O) ports for connection to external devices (e.g., a USB, Laptop, etc.) as well as a network interface, which may provide communication over various networks (e.g., Wi-Fi, Ethernet connection, WirelessHart, etc.). In an embodiment, the industrial computer 50 may also include independent user interfaces (UIs) for each of LCI bridges 12 of system 10.

As noted above with respect to FIG. 1, for each of the LCI bridges 12, the current of each of the DC link reactors 22 may be regulated independently through current regulators 58. The current regulators 58 may each be implemented as hardware components of the industrial computer 50 or as embedded software systems supported by the central processing unit 52 of industrial computer 50. The current regulators 58 may each sample the current of the respective DC link reactors 22 and compare the real-time sample DC link reactors 22 current values with predetermined reference current values that may be received from a speed regulator 72. The output of each of the current regulators 58 may then be processed and used to determine the firing angle of each of the source converter bridges 16 and 18 of each of the LCI bridges 12.

In certain embodiments, the industrial computer 50 may also include a source firing command generator 60, which like the current regulators 58 may be implemented as a hardware component of the industrial computer 50 or as an embedded software system supported by the central processing unit 52 of industrial computer 50. The source firing command generator 60 may receive the source converter bridge firing angle output of each of the current regulators 58, as well as the source voltage and current timing and/or phase information output via respective source phase lock loops 62. For example, each of the source converter bridges 16 and 18 of each of the LCI bridges 12 may include independent source (e.g., voltage and current) feedback and corresponding source phase lock loops 62 that may facilitate determining the source timing and/or phase information by providing a stable output frequency and low phase noise. The source firing command generator 60 may receive the aforementioned outputs (e.g., source firing angle and source timing information) and provide the received output data for each of the source converter bridges 16 and 18 to a firing angle calculator 64. The source firing command generator 60 may then receive from the firing angle calculator 64 the requested respective firing angle calculations for each of the source converter bridges 16 and 18, and generate the actual firing command for each of the source converter bridges 16 and 18 of each of the LCI bridges 12. In one embodiment, the source converter firing angle is mainly determined by the output of current regulator 58, and in addition, may be adjusted by the load voltage feed-forward from the load, at low speed, to reduce DC current harmonics. Additionally, firing angle calculator 64 may, for example, utilize information from the load firing generator 66 to determine the load voltage feed-forward and to calculate the source firing angle. Moreover, firing angle calculator 64 also may utilize, for example, information from source firing generator 60 to determine the load firing angle. In one embodiment, as the respective the source converter bridges 16 and 18 may be independent of one another, the source firing command generator 60 may send firing angle commands to place, for example, only two of the source bridge converters 16 and 18 in an "ON" state to control the current of the DC link reactors 22, and by extension the torque and speed of the machine 24.

Likewise, the industrial computer 50 may also include a load firing command generator 66. Similar again to the current regulators 58, the load firing command generator 66 may be implemented as a hardware component of the industrial computer 50 or as an embedded software system supported by the central processing unit 52 of industrial computer 50. The load firing angle command generator 66 may receive the load inverter bridge firing angle output from firing angle calculator 64, as well as the machine 24 voltage and current timing and/or phase information output via one load phase lock loop 68 to generate the machine speed and timing signals for load inverter bridges 20. As it may be worth noting, the firing angle calculator 64 may also use information received from the source firing command generator 60 to determine the load firing angle. The output of phase lock loop 68 may also be input to a speed regulator 72 to be compared against a speed reference to generate a current reference according to a current profile 70, which may limit the maximum allowable current reference at different speeds for the machine 24.

The firing angles for each of the load inverter bridges 20 may be adjusted according to the phase shift of the output transformers 34, 36 for each of the LCI bridges 12. The load firing angle command generator 66 may then receive from the firing angle calculator 64 the requested respective firing angle calculations for each of the load inverter bridges 20, and generate the actual firing angle command for each of the load inverter bridges 20 of each of the LCI bridges 12.

Technical effects of embodiments include methods related to paralleling multiple load commutated inverters to increase drive power and control the speed of large synchronous machines. By concurrently managing and regulating the firing angles and phase shifts of each of the LCI bridges, embodiments may also provide at least a 48 pulse power input, low output voltage, and at least a 24 pulse power output to start or continuously drive various large-scale industrial machines. Similarly, by adding more parallel LCI bridges, embodiments may also provide a flexible and cost effective way to scale up the power rating of the LCI drives and starters to produce more than 56MW of power. Accordingly, a high drive power output may be achieved with sufficient drive torque, minimum impact of circulating current, minimum input line current harmonics, minimum machine line current, and minimum machine torque ripple.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A device, comprising:
   a controller configured to receive current values generated by at least four parallel load commutated inverters (LCIs), wherein the controller comprises:
      a source firing generator configured to:
         generate independent source firing commands for each of the at least four parallel LCIs based on the received current values; and
         transmit each of the independent source firing commands to a respective one of the at least four parallel LCIs, wherein the source firing commands are configured to set input phase angle values of the four parallel LCIs.
2. The device of clause 1, wherein the source firing generator is configured to generate the independent source firing commands for each of the at least four parallel LCIs based on an input voltage and current provided to the LCIs and transmitted to the source firing generator via at least one phase lock loop.
3. The device of any preceding clause, wherein the controller comprises a firing angle generator configured to:
   calculate independent source firing angles; and
   transmit a signal indicative of the calculated independent source firing angles to the source firing generator.
4. The device of any preceding clause, wherein the source firing generator is configured to generate the independent source firing commands for each of the at least four parallel LCIs based on the signal indicative of the calculated independent source firing angles.
5. The device of any preceding clause, wherein the controller is configured to receive combined output voltage and current values from the LCIs, wherein the controller comprises:
   a load firing generator configured to:
      generate independent load firing commands for each of the at least four parallel LCIs based on the received combined output voltage and current values; and
      transmit each of the independent load firing commands to a respective one of the at least four parallel LCIs, wherein the load firing commands are configured to set load phase angle values of the four parallel LCIs.
6. The device of any preceding clause, wherein the controller comprises a firing angle generator configured to:
   calculate the independent load firing angles; and
   transmit a signal indicative of the calculated independent load firing angles to the load firing generator.
7. The device of any preceding clause, wherein the load firing generator is configured to generate the independent load firing commands for each of the at least four parallel LCIs based on the signal indicative of the calculated independent load firing angles and a signal from a load phase lock loop.
8. The device of any preceding clause, wherein the controller comprises a speed regulator configured to:
   receive an estimated speed value from the LCIs, wherein the estimated speed value is indicative of a frequency of the output voltage from the LCIs; and
   compare the estimated speed value with at least one stored value to generate a indication of an operational characteristic of a machine coupled to the LCIs.
9. The device of any preceding clause, wherein the operational characteristic comprises a number of revolutions of at least one element in the machine.
10. The device of any preceding clause, wherein the device comprises an industrial computer.
11. A non-transitory computer-readable medium having computer executable code stored thereon, the code comprising instructions for:
   receiving current values generated by at least four parallel load commutated inverters (LCIs);
   generating independent source firing commands for each of the at least four parallel LCIs based on the received current values; and
   transmitting each of the independent source firing commands to a respective one of the at least four parallel LCIs, wherein the source firing commands are configured to set input phase angle values of the four parallel LCIs.
12. The non-transitory computer-readable medium of any preceding clause, wherein the code comprising instructions for generating independent source firing commands for each of the at least four parallel LCIs generates the independent source firing commands based on an input voltage and current provided to the LCIs and transmitted to the source firing generator via at least one phase lock loop.
13. The non-transitory computer-readable medium of any preceding clause, wherein the code comprises instructions for:
   calculating the independent source firing angles; and
   transmitting a signal indicative of the calculated independent source firing angles to the source firing generator.
14. The non-transitory computer-readable medium of any preceding clause, wherein the code comprising instructions for generating the independent source firing commands for each of the at least four parallel LCIs generates the independent source firing commands based on the signal indicative of the calculated independent source firing angles.
15. The non-transitory computer-readable medium of any preceding clause, wherein the code comprises instructions for:
   receiving combined output voltage and current values from the LCIs;
   generating independent load firing commands for each of the at least four parallel LCIs based on the received combined output voltage and current values; and
   transmitting each of the independent load firing commands to a respective one of the at least four parallel LCIs, wherein the load firing commands are configured to set input phase angle values of the four parallel LCIs.
16. The non-transitory computer-readable medium of any preceding clause, wherein the code comprises instructions for:
   calculating the independent load firing angles; and
   transmitting a signal indicative of the calculated independent load firing angles to the load firing generator.
17. The non-transitory computer-readable medium of any preceding clause, wherein the code comprising instructions for generating the independent load firing commands for each of the at least four parallel LCIs generates the independent load firing commands based on the signal indicative of the calculated independent load firing angles and a signal from a load phase lock loop.
18. The non-transitory computer-readable medium of any preceding clause, wherein the code comprises instructions for:
   receiving an estimated speed value from the LCIs, wherein the estimated speed value is indicative of a frequency of the output voltage from the LCIs; and
   comparing the estimated speed value with at least one stored value to generate a indication of an operational characteristic of a machine coupled to the LCIs.
19. A device, comprising:
   a first load commutated inverter (LCI);
   a second LCI;
   a third LCI; and
   a fourth LCI, wherein each of the first, second, third, and fourth LCIs are connected in parallel, wherein each of the each of the first, second, third, and fourth LCIs receive a source input phase shifted by a constant value with respect to an adjacent LCI.
20. The device of any preceding clause, wherein each of the first, second, third, and fourth LCIs comprise a respective load inverter configured to generate an output signal for each of the first, second, third, and fourth LCIs, wherein the output signal of any of the first, second, third, and fourth LCIs is phase shifted by a second constant value with respect to the output signal of an adjacent LCI.

## Claims

1. A device, comprising:
a controller configured to receive current values generated by at least four parallel load commutated inverters (LCIs) (12), wherein the controller comprises:
a source firing generator (60) configured to:
generate independent source firing commands for each of the at least four parallel LCIs based on the received current values; and
transmit each of the independent source firing commands to a respective one of the at least four parallel LCIs, wherein the source firing commands are configured to set input phase angle values of the four parallel LCIs.

2. The device of claim 1, wherein the source firing generator (60) is configured to generate the independent source firing commands for each of the at least four parallel LCIs based on an input voltage and current provided to the LCIs and transmitted to the source firing generator via at least one phase lock loop.

3. The device of claim 1 or claim 2, wherein the controller comprises a firing angle generator configured to:
calculate independent source firing angles; and
transmit a signal indicative of the calculated independent source firing angles to the source firing generator.

4. The device of claim 3, wherein the source firing generator (60) is configured to generate the independent source firing commands for each of the at least four parallel LCIs (12) based on the signal indicative of the calculated independent source firing angles.

5. The device of any preceding claim, wherein the controller is configured to receive combined output voltage and current values from the LCIs, wherein the controller comprises:
a load firing generator (66) configured to:
generate independent load firing commands for each of the at least four parallel LCIs based on the received combined output voltage and current values; and
transmit each of the independent load firing commands to a respective one of the at least four parallel LCIs, wherein the load firing commands are configured to set load phase angle values of the four parallel LCIs.

6. The device of claim 5, wherein the controller comprises a firing angle generator configured to:
calculate the independent load firing angles; and
transmit a signal indicative of the calculated independent load firing angles to the load firing generator.

7. The device of claim 6, wherein the load firing generator (66) is configured to generate the independent load firing commands for each of the at least four parallel LCIs based on the signal indicative of the calculated independent load firing angles and a signal from a load phase lock loop.

8. The device of claim 5, 6 or 7, wherein the controller comprises a speed regulator (72) configured to:
receive an estimated speed value from the LCIs, wherein the estimated speed value is indicative of a frequency of the output voltage from the LCIs; and
compare the estimated speed value with at least one stored value to generate a indication of an operational characteristic of a machine coupled to the LCIs.

9. The device of claim 8, wherein the operational characteristic comprises a number of revolutions of at least one element in the machine.

10. The device of any preceding claim, wherein the device comprises an industrial computer (50).

11. A non-transitory computer-readable medium having computer executable code stored thereon, the code comprising instructions for:
receiving current values generated by at least four parallel load commutated inverters (LCIs);
generating independent source firing commands for each of the at least four parallel LCIs based on the received current values; and
transmitting each of the independent source firing commands to a respective one of the at least four parallel LCIs, wherein the source firing commands are configured to set input phase angle values of the four parallel LCIs.

12. The non-transitory computer-readable medium of claim 11 or claim 12, wherein the code comprising instructions for generating independent source firing commands for each of the at least four parallel LCIs generates the independent source firing commands based on an input voltage and current provided to the LCIs and transmitted to the source firing generator via at least one phase lock loop.

13. The non-transitory computer-readable medium of claim 11 or claim 12, wherein the code comprises instructions for:
calculating the independent source firing angles; and
transmitting a signal indicative of the calculated independent source firing angles to the source firing generator.

14. The non-transitory computer-readable medium of claim 13, wherein the code comprising instructions for generating the independent source firing commands for commands based on the signal indicative of the calculated independent source firing angles.

15. The non-transitory computer-readable medium of claim 11, 12, 13 or 14, wherein the code comprises instructions for:
receiving combined output voltage and current values from the LCIs;
generating independent load firing commands for each of the at least four parallel LCIs based on the received combined output voltage and current values; and
transmitting each of the independent load firing commands to a respective one of the at least four parallel LCIs, wherein the load firing commands are configured to set input phase angle values of the four parallel LCIs.
